(19) Europäisches Patentamt
European Patent Office
Office européen des brevets

(11) Veröffentlichungsnummer: **0 130 458 B1**

(12) # EUROPÄISCHE PATENTSCHRIFT

(45) Veröffentlichungstag der Patentschrift: **24.08.88**

(51) Int. Cl.⁴: **C 08 G 65/26**, C 08 G 18/48

(21) Anmeldenummer: **84106996.6**

(22) Anmeldetag: **19.06.84**

(54) **Verwendung von Polyoxyalkylenethern des Rizinusöles zur Herstellung von Polyurethanen.**

(30) Priorität: **02.07.83 DE 3323880**

(43) Veröffentlichungstag der Anmeldung: **09.01.85 Patentblatt 85/2**

(45) Bekanntmachung des Hinweises auf die Patenterteilung: **24.08.88 Patentblatt 88/34**

(84) Benannte Vertragsstaaten: **BE FR GB IT NL**

(56) Entgegenhaltungen:
**EP-A-0 004 353**
**EP-A-0 051 744**
**DE-A-2 014 374**
**DE-C-1 001 977**
**GB-A-1 047 253**
**GB-A-1 139 646**
**US-A-3 278 457**

(73) Patentinhaber: **Th. Goldschmidt AG, Goldschmidtstrasse 100 Postfach 101461, D-4300 Essen 1 (DE)**

(72) Erfinder: **Fock, Jürgen, Dr., Mörsenbroicher Weg 114, D-4000 Düsseldorf 30 (DE)**
Erfinder: **Schedlitzki, Dietmar, Dr., Potthoffs Börde 18, D-4300 Essen (DE)**

**EP 0 130 458 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Polyurethane werden durch Umsetzung von Polyolen und Polyisocyanaten erhalten. Je nach Wahl der Polyole und/oder der Polyisocyanate entstehen Polyurethane verschiedener Anwendungsmöglichkeiten. Polyurethane werden u.a. auch als Kleb- oder als Überzugsmittel verwendet.

Will man Polyurethane als Kleb- oder Überzugsmittel verwenden, kann man als Polyolkomponente Polyetherole, Polyesterole, Rizinusöl oder Polymerisate auf Acrylbasis mit Hydroxylgruppen einsetzen.

Polyetherole entstehen durch Anlagerung von Alkylenoxiden, insbesondere Ethylenoxid und/oder Propylenoxid, an mehrwertige Alkohole. Polyetherole haben durch ihren Gehalt an Oxyethylengruppen den Nachteil, dass sie verhältnismässig hydrophil sind und deshalb zur Aufnahme von Wasser neigen. Bei der Umsetzung mit Polyisocyanaten entwickelt sich im Polyurethan eine der Wassermenge entsprechende Menge Kohlendioxid in Form von kleinen Bläschen, welche die mechanischen Eigenschaften und mitunter auch die Haftungseigenschaften der Polyurethane auf dem Untergrund beeinträchtigen. Der hydrophile Charakter der Polyole wird des weiteren durch den Gehalt an Hydroxylgruppen beeinflusst. Die nachfolgenden Aussagen über die Hydrophilie chemisch verschiedener Polyole beziehen sich deshalb auf vergleichbare Hydroxylgehalte.

Darüber hinaus zeigen Polyetherole auf der Basis von Ethylen- und Propylenoxid mit üblichen Startalkoholen den Nachteil häufig ungenügender Haftung auf verschiedenen Werkstoffen.

Polyesterole zeigen eine geringere Hydrophilie als die Polyetherole und weisen dementsprechend eine geringere Wasseraufnahme auf. Die Haftung der mit Polyesterolen hergestellten Polyurethane ist gegenüber den Polyurethanen auf Polyetherolbasis deutlich verbessert. Ein Nachteil der Polyesterole ist jedoch deren hohe Viskosität, die ihre Verarbeitung erschwert. Bedingt durch die hohe Viskosität ist es auch schwierig, in die Polyesterole Füllstoffe einzuarbeiten.

Die Topfzeit der Mischungen von Polyesterolen und Polyisocyanaten ist relativ gering, da durch die hohe Ausgangsviskosität im Verlauf der Reaktion der Polyesterole mit den Polyisocyanaten sehr schnell eine Viskosität erreicht wird, die eine Verarbeitung der Produkte nicht mehr zulässt.

Acylatcopolymerisate mit Hydroxylgruppen sind im allgemeinen ebenfalls sehr viskos. Zur Herstellung niedrigviskoser Copolymerisate bedarf es besonderer Massnahmen, wie z.B. der Polymerisation in Gegenwart mercaptogruppenhaltiger Regler, wie dies in der FR-A-30 47 926 beschrieben ist.

Als natürliche, Hydroxylgruppen enthaltende Polyolkomponente zur Herstellung von Urethanen hat sich Rizinusöl bewährt. Rizinusöl weist nur eine sehr geringe Wasseraufnahme auf und verbindet niedrige Viskosität mit hoher Reaktivität. Die Haftung der Polyurethane, zu deren Herstellung als Polyolkomponente Rizinusöl verwendet worden ist, ist gut. Die Eigenschaften von Urethanen, welche unter Verwendung von Rizinusöl hergestellt worden sind, sowie die Eigenschaften von Urethanen auf der Basis modifizierter Rizinusölderivate können einem Übersichtsreferat «Paint & Resin», Heft 7/8, 1982, S. 34 bis 36, entnommen werden.

Zur Modifizierung der Eigenschaften sowohl der Rizinusölkomponente wie der daraus durch Umsetzung mit Isocyanaten hergestellten Urethane sind bereits verschiedene Möglichkeiten beschrieben worden. Aus der US-A-2 994 674 ist es bekannt, Rizinusöl bei Temperaturen von 200 bis 260 °C mit Polyoxyalkylenethern umzuestern. Diese Umesterungsreaktion greift an den Estergruppen des Rizinusölfettsäuretriglycerids an, wobei die sekundären OH-Gruppen des Rizinusöl weitgehend unbeeinflusst bleiben.

Aus der JA-A-79 061295 ist es bekannt. Alkylenoxid unter Verwendung von Kaliumhydroxid als Katalysator an Rizinusöl anzulagern. Bei dieser alkalischen Katalyse entstehen aber Produkte, deren Hydroxylzahl gegenüber der rechnerisch zu ermittelnden Hydroxylzahl wesentlich zu hoch liegt. Dies ist vermutlich auf Umesterungsreaktionen und Verseifungsreaktionen zurückzuführen, die durch den alkalischen Katalysator verursacht werden. Die Wasseraufnahme dieser Produkte ist, offenbar bedingt durch die Bildung hydrophiler Verseifungsprodukte, verhältnismässig hoch.

In der DE-A-25 57 594 sind Produkte beschrieben, welche durch Umsetzung äquimolarer Mengen an Rizinusöl, Ethylenoxid und Propylenoxid entstanden sind. Diese Produkte werden aber nicht weiter mit Polyisocyanaten umgesetzt, sondern werden direkt als Entschäumer verwendet.

In der EP-A-4353, der GB-B-1 047 253, der US-A-3 661 782 und der Literaturstelle «Revista de Chimie» (Bukarest) 29, 1983, Seite 626–8, sind weitere Polyoxyalkylenether des Rizinusöls beschrieben. Die Herstellung der dort genannten Polyoxyalkylenether erfolgt aber unter Verwendung alkalischer Katalysatoren.

Bei der Anlagerung von Alkylenoxid an Rizinusöl in Gegenwart von Alkali erfolgt jedoch in erheblichem Umfang eine Verseifung des Rizinusöls und anstelle des oder neben dem oxalkylierten Rizinusöl(es) bildet sich eine Vielzahl von Produkten, z.B. oxalkyliertes Glycerin, Polyoxyalkylenester der Rizinusölfettsäure sowie Alkylenoxidderivate dieser Verbindungen, bei denen das Alkylenoxid an die Hydroxylgruppe der Rizinusölfettsäure angelagert ist. Es kommt ferner zu Umesterungsreaktionen der entstandenen Produkte.

Eine Untersuchung des Reaktionsablaufs ist in «Revista de Chimie» zu finden. In dieser Entgegenhaltung wird auf eine Veröffentlichung von K. Müller zurückgegriffen, die in der Zeitschrift «Tenside», 1966, Seiten 37 bis 45, erschienen ist. In dieser Veröffentlichung von Müller wird über die Analyse von Cremophor EL berichtet. Cremophor EL ist ein Umsetzungsprodukt von Rizinusöl mit Ethylenoxid bei erhöhter Temperatur in Gegenwart von Alkali, wobei auf 1 Mol Rizinolsäuretriglycerid etwa 40 Mol Ethylenoxid zur Einwirkung gelangen. Es wird nachgewiesen, dass das Umsetzungsprodukt etwa 17% eines hydrophilen Anteils enthält, der aus Glycerinpolyglykolether und Polyglykolen besteht. Der hydrophobe Anteil beträgt etwa 83% und enthält neben wenig nichtumgesetztem Rizinusöl als Hauptbestandteil Ester aus Rizinolsäure und Glycerinpolyglykolether; in nennenswerten Mengen sind Ester aus Rizinolsäure und Polyglykolen vorhanden sowie wahrscheinlich Diester und höhere Ester, bei denen die Hydroxylgruppen dieser Ester nochmals mit Rizinolsäure verestert sind. Die sekundären Hydroxylgruppen der Rizinolsäurekomponente der Ester sind in sehr geringem Umfang mehrfach oxethyliert.

Aus der DE-A-20 14 374 ist die Verwendung von Lewis-Säuren für die Katalyse der Alkylenoxidaddition an durch Haloepoxid modifiziertes Rizinusöl bekannt. Die Verwendung von Metallkomplexverbindungen als Katalysatoren zur Anlagerung von Alkylenoxiden an Verbindungen mit acidem Wasserstoffrest kann der US-A-3 278 457 entnommen werden.

Der Erfindung liegt die Aufgabe zugrunde, zur Herstellung von Polyurethanen für Kleb- oder Überzugsmittel Polyolkomponenten auf Rizinusölbasis aufzufinden, deren Wasseraufnahme vernachlässigbar gering ist, welche möglichst niedrigviskos sein sollen und deren Topfzeit gegenüber dem unmodifizierten Rizinusöl erhöht sein soll, um die Verarbeitbarkeit von Mischungen dieser Verbindungen mit Polyisocyanaten zu verlängern. Die mit Hilfe dieser Rizinusölderivate erhaltenen Polyurethane sollen ausgezeichnete Haftung auf verschiedenen Untergründen, wie z.B. Metall- und Kunststoffoberflächen, aufweisen. Die Einarbeitung von Füllstoffen und gegebenenfalls Pigmenten soll möglichst günstig beeinflusst werden.

Gegenstand der Erfindung ist die Verwendung von Polyoxyalkylenethern des Rizinusöles, welche durch Anlagerung von Alkylenoxiden der allgemeinen Formel

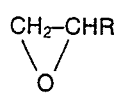

in welcher R ein geradkettiger oder verzweigter Kohlenwasserstoffrest mit 1 bis 18 Kohlenstoffatomen ist, an Rizinusöl im Molverhältnis von 1 bis 20 Mol Oxiran je Mol OH-Gruppen des Rizinusöles in Gegenwart von Metallhexacyanometallat-Komplexverbindungen oder Lewis-Säuren als Katalysatoren bei Temperaturen von 20 bis 120 °C erhältlich sind, als ausschliessliche oder anteilige Polyolkomponente zur Herstellung von Polyurethanen für Kleb- oder Überzugsmittel.

Als Rizinusöl verwendet man zweckmässig das technische Rizinusöl, das zu etwa 80 bis 87 Gew.-% in Form des Rizinolsäuretriglycerids vorliegt. Dabei sind im technischen Rizinusöl noch die Ölsäure-, Linolsäure-, Palmitinsäure- und Stearinsäuretriglyceride enthalten. Ein übliches, im Handel erhältliches Rizinusöl hat folgende Kenndaten: Jodzahl: 81 bis 91, Verseifungszahl: 174 bis 186, OH-Zahl: mindestens 160, Säurezahl: <2, Dichte bei 20°: 0,955 bis 0,968.

Beispiele für die Anlagerung geeigneter Alkylenoxide sind Propylenoxid, Butylenoxid und höhere Alkylenoxide, wie sie beispielsweise erhalten werden, wenn man Alkene mit endständigen Doppelbindungen epoxidiert. Diese Produkte sind auf petrochemischem Wege in einfacher Weise herstellbar. Besonders bevorzugt ist aus Alkylenoxid das Propylenoxid.

Wesentlich für die Herstellung der erfindungsgemäss zu verwendenden Polyoxyalkylenether des Rizinusöles ist die Verwendung an sich bekannter Metallhexacyanometallat-Komplexkatalysatoren oder sauren Katalysatoren. Besonders bevorzugt ist dabei als Katalysator Zn-hexacyanocobaltat, welches mit 1.2-Dimethoxyethan komplexiert ist. Andere geeignete Komplexkatalysatoren sind:

Zn-hexacyano-ferrat(III),
Zn-hexacyano-ferrit(II),
Ni(II)-hexacyano-ferrat(II),
Ni(III)-hexacyanoferrat-(III),
Zn-hexacyano-ferrat-(III)-hydrat,
Co(II)-hexacyano-ferrat(III),
Ni(II)-hexacyano-ferrat-(III)-hydrat,
Fe(II)-hexacyano-ferrat(III),
Co(II)-hexacyano-cobaltat(III).

Ferner können Lewis-Säuren, wie Bortrifluoridetherat, als Katalysatoren verwendet werden.

Der Vorteil der Verwendung dieser Katalysatoren besteht darin, dass im Gegensatz zu den modifizierten Produkten des Standes der Technik Umesterungsreaktionen des Triglycerids der Rizinolsäure weitgehend vermieden werden, so dass die Anlagerung der Alkylenoxide praktisch ausschliesslich an den sekundären Hydroxylgruppen erfolgt. Unterstützt wird diese Art der Anlagerung durch Anwendung mässig erhöhter Temperaturen von 20 bis 120 °C. Hierdurch behalten die Verfahrensprodukte auch die helle Farbe des zur Herstellung verwendeten Rizinusöles.

Bei einer Verseifung der erfindungsgemäss zu verwendenden Polyoxyalkylenether entstehen Glycerin und an der OH-Gruppe alkoxylierte Rizinolsäure. Bei der Verseifung von alkalisch katalysierten Polyoxyalkylenethern des Rizinusöles entsteht ein komplexes Gemisch von Glycerin, alkoxyliertem Glycerin, Polyoxyalkylendiolen und Polyoxyalkylenethern der Rizinolsäure, wobei die Bildung weiterer Verbindungen nicht ausgeschlossen ist. Die unterschiedliche Zusammensetzung des Verseifungsproduktes ist durch chromatographische Untersuchung ohne weiteres nachzuweisen.

Da die erfindungsgemäss zu verwendenden Polyoxyalkylenether des Rizinusöles praktisch keine Nebenprodukte enthalten, entspricht die OH-Zahl, die sich aus der OH-Zahl des Rizinusöles und der Menge des angelagerten Alkylenoxids ergibt, dem gefundenen Wert. Beispielsweise ist die OH-Zahl des Produktes gemäss Beispiel 2 nach der Theorie 44, gefunden 44. Lagert man gleiche Mengen des Alkylenoxids unter Verwendung von 5% KOH als Katalysator an, findet man eine OH-Zahl von 59

infolge der Umesterungsreaktionen. Die Viskosität der erfindungsgemäss zu verwendenden Produkte ist deutlich höher als die der Produkte des Standes der Technik unter Verwendung alkalischer Katalysatoren. Die Viskosität des Produktes von Beispiel 2 beträgt 970 mPas; die des alkalisch katalysierten Produktes 336 mPas. Dies ist ein Hinweiszeichen für die enthaltenen kurzkettigen Spaltprodukte.

Schliesslich lässt sich das mittlere Molekulargewicht der erfindungsgemäss zu verwendenden Verbindungen mit dem der alkalisch katalysierten Verbindungen vergleichen. Dies kann gelchromatographisch geschehen, wobei man die Eichung mit Polypropylenglykol vornehmen kann. Da Polypropylenglykol ein Diol, das erfindungsgemäss zu verwendende Produkt jedoch ein Triol ist, entsteht hier ein gewisser methodischer Fehler, der aber in Kauf genommen werden kann, da es ja im wesentlichen auf den Vergleich der mit Komplexverbindungen oder Lewis-Säuren katalysierten und der alkalisch katalysierten Produkte ankommt. Gelchromatographisch wird bei dem Produkt des Beispiels 2 ein Molekulargewicht von 3500 gefunden, was in guter Übereinstimmung mit dem zu erwartenden Molekulargewicht steht. Das analog Beispiel 2 hergestellte, jedoch alkalisch katalysierte Produkt hat ein Molekulargewicht von 2300. Auch dies zeigt wieder die Bildung niedrigmolekularer Spaltprodukte.

Für die Umsetzung mit Polyisocyanaten sind die erfindungsgemäss zu verwendenden Verbindungen mit einer OH-Zahl von 40 bis 130 besonders brauchbar. Dies entspricht im Falle der Anlagerung von Propylenoxid einem mittleren Gehalt von 4 bis 55 Mol Propylenoxid pro Molekül des Rizinusöles. Produkte mit einer OH-Zahl im unteren Bereich, d.h. von etwa 40 bis 80, eignen sich insbesondere zur Herstellung flexibler Polyurethanüberzüge und -klebstoffe. Produkte mit höheren OH-Zahlen, d.h. von etwa 80 bis 130, liefern Polyurethane grösserer Härte.

Als Polyisocyanate können ganz allgemein die aus dem Stand der Technik bekannten Polyisocyanate verwendet werden. Vorzugsweise werden Polyisocyanate folgender Formel verwendet

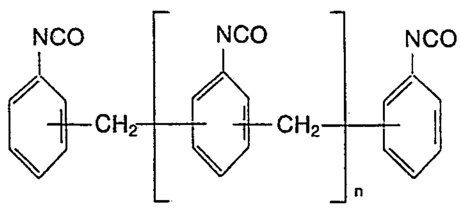

wobei n $\leqq 3$ ist,
oder

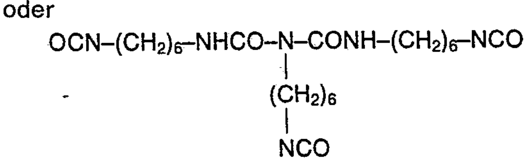

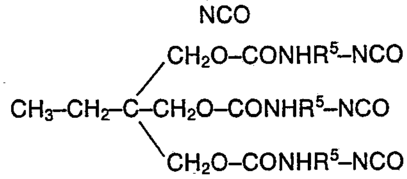

worin $R^5$ den Rest

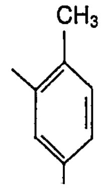

und/oder

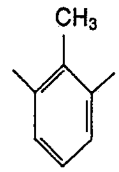

bedeutet.

Diese Isocyanate sind im Handel erhältlich. Jedoch sind auch andere Polyisocyanate, wie z.B.
1,6-Hexamethylendiisocyanat;
2,4,4-Trimethyl-1,6-hexamethylendiisocyanat;
3-Isocyanatomethyl-3,5,5-trimethylcyclohexylisocyanat;
1,4-Tetramethylendiisocyanat;
2,4- und 2,6-Hexahydrotoluylendiisocyanat;
Hexahydro-1,3- bzw. -1,4-phenylendiisocyanat;
1,3- und 1,4-Phenylendiisocyanat;
2,4- und 2,6-Toluylendiisocyanat;
4,4′-Diisocyanato-diphenylmethan;
Naphthylen-1,5-diisocyanat;
m-Xylylen-diisocyanat;
Tris-(4-isocyanatophenyl)-thiophosphat;
4,4′,4″-Triisocyanato-triphenylmethan;
2,4,6-Triisocyanato-toluol oder
2,4,4′-Triisocyanato-diphenylether,
geeignet. Die Isocyanate müssen jedoch die Bedingung erfüllen, dass sie im Durchschnitt mindestens zwei Isocyanatgruppen pro Molekül aufweisen.

Als Präpolymere der Isocyanate können deren partielle Umsetzungsprodukte mit Polyether- oder Polyesterpolyolen eines Molekulargewichtes <2000 verwendet werden, wobei die Polyether- oder Polyesterpolyole im durchschnittlichen Molekül mindestens zwei Hydroxylgruppen aufweisen und wobei die Polyisocyanate mit diesen Polyolen in einem solchen Verhältnis umgesetzt werden, dass einer Hydroxylgruppe 1,5 bis 3 Isocyanatgruppen entsprechen.

Die Wasseraufnahme der erfindungsgemäss zu verwendenden Polyoxyalkylenether des Rizinusöles in wasserdampfgesättigter Atmosphäre nach 7 Tagen und 20 °C ist <2 Gew.-%. Im Vergleich dazu weisen Polypropylenoxidtriole mit ähnlichem Molekulargewicht ausgehend von Glycerin als Startalkohol eine Wasseraufnahme von mehr als 5 Gew.-% Wasser auf. Die Topfzeit der Mischungen der erfindungsgemäss zu verwendenden Produkte mit Isocyanaten ist, verglichen mit der von Gemischen, welche Rizinusöl enthalten, wesentlich erhöht. Mischungen von Polymethylen-polyphenylen-polyisocyanaten mit Polyoxypropylenethern des Rizinusöles einer OH-Zahl von 130 weisen eine Topfzeit von etwa 3,5 Stunden auf. Entsprechende Mischungen, welche statt der erfindungsgemäss zu verwendenden Verbindungen Rizinusöl enthalten, zeigen nur eine Topfzeit von 40 Minuten.

Die Haftung der mit den erfindungsgemäss zu verwendenden Polyolen erhältlichen Polyurethane entspricht mindestens der guten Haftung von Polyurethanen auf Rizinusölbasis. Die Einarbeitung von Pigmenten und Füllstoffen ist infolge der geringeren Viskosität verbessert.

Aufgrund dieser Eigenschaften eignen sich die erfindungsgemäss zu verwendenden Polyoxyalkylenether des Rizinusöles in besonderer Weise zur Herstellung von Polyurethanen, welche als Klebmittel oder zur Herstellung von Überzügen geeignet sind. Durch die Wahl des zur Anlagerung verwendeten Alkylenoxids, der Kettenlänge des Polyoxyalkylenethers und des zur Umsetzung verwendeten Polyisocyanates lassen sich Produkte der jeweils gewünschten anwendungstechnischen Eigenschaften in einfacher und dem Fachmann bekannter Weise herstellen. Dabei sind die Eigenschaften der ausgewählten Polyole ursächlich für die Eigenschaften der mit ihnen erhaltenen Polyurethane.

Die erfindungsgemäss zu verwendenden Polyoxyalkylenether des Rizinusöles sind aber auch vorteilhaft in Gemischen mit anderen Polyolen, insbesondere mit Polyetherolen oder Rizinusöl, zu verwenden, wobei bis zu 95 Gew.-% an anderen Polyolen im Polyolgemisch vorhanden sein können. In manchen Fällen kann es auch vorteilhaft sein, in einer Formulierung mehrere der ausgewählten Polyole nebeneinander zu verwenden, um bestimmte Eigenschaften zu verbessern.

Zusätze von Polyoxyalkylenethern des Rizinusöles mit niedriger OH-Zahl können bereits in geringer Dosierung in ausgeprägter Weise die Zähigkeit und Verformbarkeit von Klebstoffen und Beschichtungen erhöhen.

In den folgenden Beispielen wird die Herstellung der erfindungsgemäss zu verwendenden Verbindungen sowie die Eigenschaften der mit ihnen erhaltenen Polyurethane näher gezeigt.

Herstellung der erfindungsgemäss zu verwendenden Polyoxyalkylenether des Rizinusöles

Beispiel 1

Zu einer Mischung von 1000 g eines handelsüblichen Rizinusöles (OH-Zahl: 165, Säurezahl: 2, Dichte bei 25 °C: 0,95 g/cm$^3$, Jodzahl: 87, Wassergehalt: unter 0,1 Gew.-%) und 2,6 g Zink-hexacyano-cobaltat(III) werden bei 110 °C unter Stickstoff und Rühren 310 g Propylenoxid zudosiert. Die Anlagerung des Propylenoxids an das Rizinusöl ist nach etwa 4 bis 6 Stunden abgeschlossen. Geringe Mengen nicht umgesetzten Propylenoxids werden im Vakuum entfernt. Der erhaltene Polyoxypropylenether wird nach dem Abkühlen filtriert. Er wird als Polyol I bezeichnet. Die Kenndaten dieses Polyols sind der Tabelle 1 zu entnehmen.

Beispiel 2

Unter den gleichen Bedingungen wie in Beispiel 1 werden an 1000 g Rizinusöl in Gegenwart von 7,4 g Zink-hexacyano-cobaltat(III) 2755 g Propylenoxid angelagert. Der erhaltene Polyoxypropylenether wird als Polyol II bezeichnet. Seine Kenndaten sind in Tabelle 1 enthalten.

Beispiel 3

Zu einer Mischung von 1000 g Rizinusöl und 30 g einer 5 gew.-%igen Lösung von Brotrifluoridetherat in Diethylether werden unter Überleiten von Stickstoff und Rühren 309 g Butylenoxid innerhalb 60 Minuten bei 60 °C zudosiert. Die Mischung wird für weitere 3 bis 5 Stunden auf 60 °C erwärmt, bis der Epoxysauerstoffgehalt unter 0,1 Gew.-% gesunken ist. Danach wird das Reaktionsprodukt mit Natriumhydrogencarbonat neutralisiert, mehrfach mit Wasser gewaschen und im Vakuum von flüchtigen Anteilen befreit. Der nach dem Filtrieren erhaltene Polyoxybutylenether wird als Polyol III bezeichnet. Seine Kenndaten sind der Tabelle 1 zu entnehmen.

Beispiel 4

Zu einer Mischung von 1000 g Rizinusöl und 56 g einer 5 gew.-%igen Lösung von Bortrifluoridetherat in Diethylether werden 747 g eines handelsüblichen technischen α-Olefinoxids, einem Gemisch aus Dodecen- und Tetradecen-1-oxid, mit einem Epoxysauerstoffgehalt von 7,9 Gew.-% unter gleichen Bedingungen wie in Beispiel 3 zudosiert. Nach einer Reaktionszeit von 7 Stunden ist der Epoxysauerstoffgehalt auf unter 0,1 Gew.-% gesunken. Nach Aufarbeitung des Reaktionsproduktes wie in Beispiel 3 erhält man das Polyol IV, dessen Kenndaten in Tabelle 1 enthalten sind.

Tabelle 1 – Kenndaten der in den Beispielen 1 bis 4 hergestellten Polyoxyalkylenether des Rizinusöles

| Kenndaten | Polyol I | II | III | IV |
|---|---|---|---|---|
| OH-Zahl (mg KOH/g) | 125 | 44 | 124 | 98 |
| Säurezahl (mg KOH/g) | 0,1 | 0,2 | 1,1 | 1,2 |
| Viskosität 25° C (mPas) | 580 | 970 | 800 | 600 |
| Dichte 25° C (g/cm$^3$) | 0,97 | 0,99 | 0,94 | 0,92 |
| Brechungsindex 20° C | 1,4729 | 1,4587 | 1,4739 | 1,4690 |
| Jodzahl | 65 | 22 | 67 | 51 |
| IR-Spektrum | | | | |
| Wellenzahl (cm$^{-1}$) | | | | |
| Hydroxylgruppen | 3450 | 3460 | 3450 | 3450 |
| Estercarbonylgruppen | 1742 | 1742 | 1742 | 1742 |
| Ethergruppen | 1095 | 1105 | 1095 | 1100 |

| Kenndaten | Polyol I | II | III | IV |
|---|---|---|---|---|
| Alkyl/Alkylengruppen | 2920 | 2965 | 2955 | 2955 |
| | 2850 | 2925 | 2920 | 2910 |
| | 1458 | 2860 | 2850 | 2850 |
| | 1373 | 1452 | 1460 | 1463 |
| | 720 | 1375 | 1375 | 1375 |
| | | 725 | 723 | 720 |

Wasseraufnahme und Reaktivität der in den Beispielen 1 bis 4 hergestellten Polyole

a) Wasseraufnahme

Die Wasseraufnahme der Polyole wird nach folgender Methode bestimmt: Etwa 2 g des Polyols werden mit einer Genauigkeit von ±0,2% in einer Petrischale abgewogen und 7 Tage bei 20 °C und einer relativen Luftfeuchte von über 98% gelagert. Die während dieser Lagerzeit absorbierte Wassermenge wird durch erneute Auswaage ermittelt. Die Wasseraufnahmewerte sind in Tabelle 2 enthalten. Zum Vergleich sind Rizinusöl und mehrere handelsübliche Polyoxyalkylenether auf Basis von Propylen- und Ethylenoxid und Glycerin als Startalkohol aufgeführt. Aus Tabelle 2 ist ersichtlich, dass die erfindungsgemäss zu verwendenden Polyole eine vergleichbar geringe Wasseraufnahme wie Rizinusöl aufweisen, dass jedoch die handelsüblichen Polyole deutlich höhere Wasseraufnahmewerte haben

b) Reaktivität

Die Reaktivität der Polyole wird durch Bestimmung der Topfzeit eines Zweikomponentensystems, bestehend aus einer Füllstoffe enthaltenden Polyolkomponente und einem handelsüblichen Polyisocyanat mit der näherungsweisen Strukturformel

n = ca. 1,4

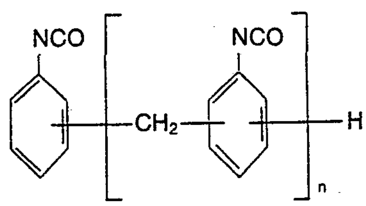

ermittelt. Das Polyphenylen-polymethylen-polyisocyanat hat einen NCO-Gehalt von 31 Gew.-%. Die Polyolkomponente besteht aus 40 Gew.-% Polyol und 60 Gew.-% Calciumcarbonat als Füllstoff. Das molare Verhältnis von Hydroxyl- zu Isocyanatgruppen in der Mischung beträgt 1 : 1,05. Sofort nach dem Vermischen werden 100 g der Mischung auf 25 °C temperiert, und die Viskosität der Mischung wird laufend gemessen, bis eine Viskosität von $10^5$ mPas bei 25 °C erreicht ist. Der Zeitraum vom Mischen bis zum Erreichen einer Viskosität von $10^5$ mPas wird als Topfzeit bezeichnet. Die Topfzeiten der erfindungsgemäss ausgewählten Polyole und einiger Vergleichspolyole sind in Tabelle 2 angeführt. Es ist ersichtlich, dass die erfindungsgemäss zu verwendenden Polyole vorteilhaft eine erheblich grössere Topfzeit aufweisen als Rizinusöl. Insbesondere haben auch die Polyole I und III, deren OH-Zahlen nur wenig unter der des Rizinusöles liegen, sehr viel längere Topfzeiten als Rizinusöl. Die anderen handelsüblichen Polyetherole haben zwar vergleichbare Topfzeiten wie die erfindungsgemäss zu verwendenden Polyole, liegen aber in der Wasseraufnahme höher als diese.

Klebstoffe aus den erfindungsgemäss zu verwendenden Polyoxyalkylenethern des Rizinusöles und deren Festigkeiten

Die Anwendung der erfindungsgemäss zu verwendenden Polyole wird am Beispiel zweikomponentiger, lösungsmittelfreier Polyurethanklebstoffe gezeigt, die eine besonders gute Schälfestigkeit im Verbund mit Metallen und Kunststoffen, wie z.B. Hart-PVC, aufweisen sollen.

Tabelle 2 – Wasseraufnahme und Topfzeit von Polyolen

| Polyol | OH-Zahl | Wasseraufnahme Gew.-% | Topfzeit Minuten |
|---|---|---|---|
| a) erfindungsgemäss zu verwendende Polyole | | | |
| I | 126 | 1,4 | 185 |
| II | 44 | 1,2 | 470 |
| III | 124 | 1,0 | 190 |
| IV | 98 | 0,7 | 220 |
| b) nicht erfindungsgemäss zu verwendende Polyole Rizinusöl | 165 | 1,1 | 45 |
| Polyethertriol aus Propylenoxid und Glycerin als Startalkohol | 160 | 12,5 | 170 |
| Polyethertriol aus Propylenoxid und Glycerin als Startalkohol | 54 | 5,5 | 360 |
| Polyethertriol aus 90 Gew.-% Propylenoxid und 10 Gew.-% Ethylenoxid sowie Glycerin als Startalkohol | 56 | 10,8 | 320 |

Als Polyisocyanat wird das oben beschriebene Polyphenylen-polymethylen-polyisocyanat mit einem NCO-Gehalt von 31 Gew.-% und einer Funktionalität von etwa 2,4 eingesetzt.

Die Polyolkomponente enthält 55 Gew.-% Calciumcarbonat als Füllstoff und 45 Gew.-% eines Gemisches mehrerer Polyole. Das Polyolgemisch hat folgende Zusammensetzung:

80% Polyol A mit einer OH-Zahl im Bereich von 90 bis 180

12% Polyol B mit einer OH-Zahl im Bereich von 250 bis 350

8% Polyol C mit einer OH-Zahl im Bereich von 40 bis 70

Im vorliegenden Anwendungsfall ist eine Kombination mehrerer Polyole mit verschiedenen OH-Zahlen prinzipiell von Vorteil, weil man mit derartigen Kombinationen eine hohe Schälfestigkeit und gleichzeitig eine gute Bindefestigkeit erreichen kann.

Die in den Klebstoffen a) bis e) verwendeten Polyole sind in Tabelle 3 enthalten. Als Polyol B mit einer OH-Zahl von 250 bis 350 wird in allen Fällen ein aus Propylenoxid und Bisphenol-A erhaltenes Polyol gemäss DE-A-31 23 059 mit einer OH-Zahl von 280 eingesetzt.

Das molare Verhältnis von Hydroxyl- zu Isocyanatgruppen beträgt in der Klebstoffmischung 1 : 1,1, d.h., es wird ein 10%iger Überschuss an Isocyanatgruppen angewendet.

Zur Ermittlung der Schälfestigkeit wird der Rollenschälversuch nach DIN 53 289 herangezogen. Hierbei werden 0,5 mm dicke Aluminiumbleche der Legierung Al Cu Mg 2 pl mit a) 3 mm dicken Aluminiumblechen und b) mit 5 mm dicken PVC-Platten verklebt. Danach wird das 0,5 mm dicke Aluminiumblech bei 20 °C abgeschält. Das Aluminium wird durch eine übliche Chromat-Schwefelsäurebeize vorbehandelt, das PVC wird aufgerauht. Die Klebstoffauftragsmenge beträgt ca. 200 g/m$^2$. Die Härtung des Klebstoffs erfolgt bei Raumtemperatur über 7 Tage; danach wird zur Vervollständigung der Härtung 2 Stunden bei 100 °C gelagert. Die Schälfestigkeitswerte sind der Tabelle 3 zu entnehmen. Es ist ersichtlich, dass besonders hohe Werte, insbesondere auch auf PVC erreicht werden, wenn die erfindungsgemäss zu verwendenden Polyole eingesetzt werden.

Tabelle 3 – Rollenschälfestigkeit von Polyurethanklebstoffen

| Lfd. Bezeichnung | Polyolkomponente Polyol A (OH-Zahl 90 bis 180) | Polyol C (OH-Zahl 40 bis 70) | Rollenschälfestigkeit nach DIN 53 295 N/mm Verbund Al/Al | Verbund Al/PVC |
|---|---|---|---|---|
| 1) Klebstoffe mit erfindungsgemäss zu verwendenen Polyolen | | | | |
| a) | Polyol I | Polyol II | 9,5 | 6,2 |
| b) | Polyol III | Polyol II | 8,7 | 5,5 |
| c) | Polyol IV | Polyol II | 8,5 | 6,1 |
| 2) Klebstoffe mit nicht erfindungsgemäss zu verwendenden Polyolen | | | | |
| d) | Rizinusöl | Polyethertriol aus Propylenoxid und Glycerin, OH-Zahl =54 | 5,2 | 1,2 |
| e) | Polyethertriol aus Propylenoxid und Glycerin, OH-Zahl = 160 | Polyethertriol aus Propylenoxid und Glycerin, OH-Zahl = 54 | 2,4 | 0,9 |

**Patentansprüche**

1. Verwendung von Polyoxyalkylenethern des Rizinusöles, welche durch Anlagerung von Alkylenoxiden der allgemeinen Formel

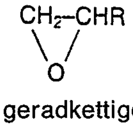

in welcher R ein geradkettiger oder verzweigter Kohlenwasserstoffrest mit 1 bis 18 Kohlenstoffatomen ist, an Rizinusöl im Molverhältnis von 1 bis 20 Mol Oxiran je Mol OH-Gruppen des Rizinusöles in Gegenwart von Metallhexacyanometallat-Komplexverbindungen oder Lewis-Säuren als Katalysatoren bei Temperaturen von 20 bis 120 °C erhältlich sind, als ausschliessliche oder anteilige Polyolkomponente zur Herstellung von Polyurethanen für Kleb- oder Überzugsmittel.

2. Verfahren zur Herstellung von Polyurethanen für Kleb- oder Überzugsmittel, dadurch gekennzeichnet, dass man als ausschliessliche oder anteilige Polyolkomponente Polyoxyalkylenether des Rizinusöles, welches durch Anlagerung von Alkylenoxiden der allgemeinen Formel

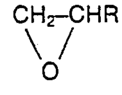

in welcher R ein geradkettiger oder verzweigter Kohlenwasserstoffrest mit 1 bis 18 Kohlenstoffatomen ist, an Rizinusöl im Molverhältnis von 1 bis 20 Mol Oxiran je Mol OH-Gruppen des Rizinusöles in Gegenwart von Metallhexacyanometallat-Komplexverbindungen oder Lewis-Säuren als Katalysatoren bei Temperaturen von 20 bis 120 °C erhältlich sind, verwendet.

## Claims

1. Use of castor oil polyoxyalkylene ethers, which are obtainable by addition of alkylene oxides of the general formula

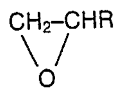

wherein R is a straight-chain or branched hydrocarbon radical having 1 to 18 carbon atoms, to castor oil in a molar ratio of 1 to 20 mol of oxirane per mol of OH groups in the castor oil in the presence of metal hexacyanometallate complex compounds or Lewis acids as catalysts at temperatures from 20 to 120 °C, as the sole or proportionate polyol component for the production of polyurethanes for adhesives or surface-coatings.

2. Process for the production of polyurethanes for adhesives or surface-coatings, characterized in that castor oil polyoxyalkylene ethers, which are obtainable by addition of alkylene oxides of the general formula

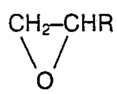

wherein R is a straight-chain or branched hydrocarbon radical having 1 to 18 carbon atoms, to castor oil in a molar ratio of 1 to 20 mol of oxirane per mol of OH groups in the castor oil in the presence of metal hexacyanometallate complex compounds or Lewis acids as catalysts at temperatures from 20 to 120 °C, are used as the sole or proportionate polyol component.

## Revendications

1. Utilisation d'éthers polyoxyalkylénés d'huile de ricin, que l'on peut obtenir par fixation d'oxydes d'alkylène, de formule générale

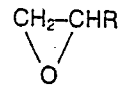

dans laquelle R est un radical hydrocarboné ayant de 1 à 18 atomes de carbone, à chaîne droite ou ramifiée, à de l'huile de ricin selon un rapport en moles de 1 à 20 moles d'oxiranne par mole de groupes OH de l'huile de ricin, en présence de composés complexes hexacyanométallates métalliques ou d'acides de Lewis en tant que catalyseurs à des températures de 20 à 120 °C, en tant que composants polyol exclusifs ou partiels, pour la préparation de polyuréthannes destinés à des adhésifs ou des produits de revêtement.

2. Procédé de préparation de polyuréthannes pour adhésifs et produits de revêtement, caractérisé en ce qu'on utilise, en tant que composants polyol exclusifs ou partiels, des éthers polyoxyalkylénés de l'huile de ricin, que l'on peut préparer par addition d'oxydes d'alkylène de formule générale

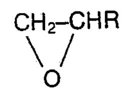

dans laquelle R est un radical hydrocarboné à chaîne droite ou ramifiée ayant de 1 à 18 atomes de carbone, à de l'huile de ricin selon un rapport en moles de 1 à 20 moles d'oxiranne par mole de groupes OH de l'huile de ricin, en présence de composés complexes hexacyanométallates métalliques ou d'acides de Lewis en tant que catalyseurs, à des températures de 20 à 120 °C.